# EUROPEAN PATENT SPECIFICATION

(11) **EP 2 950 430 B1**
(45) Date of publication and mention of the grant of the patent: **18.10.2017**
(21) Application number: 15167842.2
(22) Date of filing: 15.05.2015
(51) Int. Cl.: H02K 19/26, H02K 19/38, H02K 5/18, H02K 7/18, H02K 9/08, H02K 9/10, H02K 9/18, H02K 11/00, H02K 16/00, H02K 9/12, H02K 9/14

(54) **ELECTRICAL MACHINE SYSTEM AND WIND POWER GENERATING SYSTEM**
ELEKTRISCHES MASCHINENSYSTEM UND WINDENERGIEERZEUGUNGSSYSTEM
SYSTÈME DE MACHINE ÉLECTRIQUE ET SYSTÈME DE GÉNÉRATION D'ÉNERGIE ÉOLIENNE

(30) Priority: 21.05.2014 JP 2014105092
(43) Date of publication of application: 02.12.2015
(73) Proprietor: Hitachi, Ltd., Tokyo 100-8280 (JP)
(72) Inventor: Satou, Daisuke, Tokyo, 100-8280 (JP); Hori, Masahiro, Tokyo, 100-8280 (JP); Kusuno, Nobuhiro, Tokyo, 100-8280 (JP); Kawamura, Daichi, Tokyo, 100-8280 (JP); Kimura, Mamoru, Tokyo, 100-8280 (JP)
(74) Representative: MERH-IP Matias Erny Reichl Hoffmann Patentanwälte PartG mbB

(56) References cited:
- GB-A- 1 448 824
- JP-A- S5 815 460
- JP-A- 2013 110 801

## Description

### FIELD OF THE INVENTION

The present invention relates to an electrical machine system and a wind power generating system, more specifically, relates to an electrical machine system provided with a cooling structure for an electrical machine and an electric power converter and to a wind power generating system provided with this electrical machine system.

### BACKGROUND OF THE INVENTION

In recent years, natural energies have been drawing attention due to global warming, rise in fuel prices, power crisis and for other reasons. In wind power generation utilizing wind power which is one of natural energies, an electrical machine of a generator converts wind energy into electric energy. Various electrical machines are used as power generation devices for wind power generating systems, one of which is an AC (alternate current) excitation type electrical machine.

An AC excitation type electrical machine performs variable speed operation by adjusting the current of a rotor winding by an electric power converter. In a common AC excitation type electrical machine, the rotor winding is electrified by providing slip rings and brushes, and regular maintenance is required because the brushes are abraded.

In a wind power generating system, an electrical machine is placed in a nacelle located on a tower, which prevents easy maintenance. Accordingly, the AC excitation type electrical machine is made into a brushless design to reduce the load on the maintenance.

JP 2013-110801 discloses an example of an AC excitation type electrical machine in a brushless design. The AC excitation type electrical machine in the brushless design of JP 2013-110801 includes a first rotor (the main electrical machine), a second rotor (the auxiliary electrical machine) and an electric power converter. The electric power converter is placed on one or both of the first rotor and the second rotor to rotate with the rotors. The first rotor has a diameter larger than the second rotor has, and an electric power converter can be therefore placed in the first rotor (space on the inner side of the rotor). The AC excitation type electrical machine in the brushless design disclosed in JP 2013-110801 has a structure that the electric power converter which is a heat source is placed in the electrical machine, and therefore causes a problem that the heat value of the electrical machine increases. Moreover, since the electric power converter is placed in the electrical machine, the flow of cooling air is impeded by the electric power converter to reduce the air flow rate, which problematically lowers the cooling performance. Therefore, higher performance of the cooling apparatus is required for AC excitation type electrical machines in the brushless design.

JP 2014-33584 discloses an example of an electrical machine which has higher cooling performance. The electrical machine disclosed in JP 2014-33584 includes a cooling structure in which cooling air inside and outside of the machine flows in the opposite directions with each other. This cooling structure gives the electrical machine of JP 2014-33584 high cooling performance by using the ventilation cooling inside the machine and the housing cooling outside the machine in combination, and mitigates the temperature distributions generated by the two cooling methods so that a homogeneous temperature distribution can be obtained.

### SUMMARY OF THE INVENTION

The AC excitation type electrical machine in a brushless design disclosed in JP 2013-110801 has the problems in the cooling performance as described above, and an improvement in the cooling performance has been required. The cooling structure of the electrical machine disclosed in JP 2014-33584 is not applicable to a structure with two electrical machines as the AC excitation type electrical machine in the brushless design disclosed in JP 2013-110801, or it does not anticipate placing the electric power converter in the electrical machine. Accordingly, the electrical machine disclosed in JP 2013-110801 has a problem that the main electrical machine is cooled effectively but the auxiliary electrical machine and the electric power converter are not sufficiently cooled.

The present invention has been made considering the problems stated above. An object of the present invention is to provide an electrical machine system which includes two AC excitation type electrical machines in a brushless design and an electric power converter and has a cooling structure with higher cooling performance for these electrical machines and the electric power converter than conventional ones. Another object of the present invention is to provide a wind power generating system including such an electrical machine system.

The electrical machine system according to the present invention has the following features.

An electrical machine system comprising a first electrical machine, a second electrical machine provided next to the first electrical machine, an electric power converter an internal fan provided next to the second electrical machine, a heat exchanger, and a shaft. Each of the first electrical machine and the second electrical machine includes a stator having a winding and an iron core, a rotor having a winding and an iron core and disposed on the inner side of the stator, and an outer periphery surrounded by a frame. The rotor of the first electrical machine and the rotor of the second electrical machine are mechanically connected to the shaft. The stator of the second electrical machine has a smaller outer diameter than the stator of the first electrical machine has. The electric power converter is mechanically connected to the shaft and placed in the space on the inner side of the rotor of the first electrical machine, and is electrically connected to the winding of the rotor of the first electrical machine and the winding of the rotor of the second electrical machine. The internal fan is mechanically connected to the shaft and circulates internal air into the second electrical machine, the electric power converter, and the first electrical machine. The heat exchanger is placed on the outer side of the second electrical machine, external air flowing into the heat exchanger and the internal air circulated by the internal fan flowing into the heat exchanger, and the heat exchanger cooling the entered internal air by heat exchange between the entered internal air and the entered external air.

According to the present invention, an electrical machine system is provided which includes two AC excitation type electrical machines in a brushless design and an electric power converter and has a cooling structure with higher cooling performance for these electrical machines and the electric power converter than conventional ones, and a wind power generating system including such an electrical machine system is also provided.

### BRIEF DESCRIPTION OF THE DRAWINGS

Fig. 1A is a front view of the electrical machine system according to a first embodiment of the present invention;
Fig. 1B is a cross-sectional view of the electrical machine system according to the first embodiment of the present invention taken along line A-A in Fig. 1A;
Fig. 1C is a cross-sectional view of the electrical machine system according to the first embodiment of the present invention taken along line B-B in Fig. 1A;
Fig. 1D is a cross-sectional view of the electrical machine system according to the first embodiment of the present invention taken along line C-C in Fig. 1C;
Fig. 2A is a front view of an electrical machine system according to a second embodiment of the present invention;
Fig. 2B is a cross-sectional view of the electrical machine system according to the second embodiment of the present invention taken along line A-A in Fig. 2A;
Fig. 2C is a cross-sectional view of the electrical machine system according to the second embodiment of the present invention taken along line B-B in Fig. 2A;
Fig. 2D is a cross-sectional view of the electrical machine system according to the second embodiment of the present invention taken along line C-C in Fig. 2C;
Fig. 3A is a front view of an electrical machine system according to a third embodiment of the present invention;
Fig. 3B is a cross-sectional view of the electricalmachine system according to the third embodiment the present invention taken along line A-A in Fig. 3A;
Fig. 3C is a cross-sectional view of the electrical machine system according to the third embodiment of the present invention taken along line B-B in Fig. 3A;
Fig. 3D is a cross-sectional view of the electrical machine system according to the third embodiment of the present invention taken along line C-C in Fig. 3C;
Fig. 4A is a front view of the electrical machine system according to a fourth embodiment of the present invention;
Fig. 4B is a cross-sectional view of the electrical machine system according to the fourth embodiment of the present invention taken along line A-A in Fig. 4A;
Fig. 4C is a cross-sectional view of the electrical machine system according to the fourth embodiment of the present invention taken along line B-B in Fig. 4A;
Fig. 4D is a cross-sectional view of the electrical machine system according to the fourth embodiment of the present invention taken along line C-C in Fig. 4C;
Fig. 5A is a front view of the electrical machine system according to a fifth embodiment of the present invention;
Fig. 5B is a cross-sectional view of the electrical machine system according to the fifth embodiment of the present invention taken along line A-A in Fig. 5A;
Fig. 5C is a cross-sectional view of the electrical machine system according to the fifth embodiment of the present invention taken along line B-B in Fig. 5A;
Fig. 5D is a cross-sectional view of the electrical machine system according to the fifth embodiment of the present invention taken along line C-C in Fig. 5C;
Fig. 6A is a front view of the electrical machine system according to a sixth embodiment of the present invention;
Fig. 6B is a cross-sectional view of the electrical machine system according to the sixth embodiment of the present invention taken along line A-A in Fig. 6A;
Fig. 6C is a cross-sectional view of the electrical machine systemaccording to the sixth embodiment of the present invention taken along line B-B in Fig. 6A;
Fig. 6D is a cross-sectional view of the electrical machine system according to the sixth embodiment of the present invention taken along line C-C in Fig. 6C;
Fig. 7A is a front view of the electrical machine system according to a seventh embodiment of the present invention;
Fig. 7B is a cross-sectional view of the electrical machine system according to the seventh embodiment of the present invention taken along line A-A in Fig. 7A;
Fig. 7C is a cross-sectional view of the electrical machine system according to the seventh embodiment of the present invention taken along line B-B in Fig. 7A;
Fig. 8A is a front view of the electrical machine system according to an eighth embodiment of the present invention;
Fig. 8B is a cross-sectional view of the electrical machine system according to the eighth embodiment of the present invention taken along line A-A in Fig. 8A;
Fig. 8C is a cross-sectional view of the electrical machine system according to the eighth embodiment of the present invention taken along line B-B in Fig. 8A; and
Fig. 9 is a schematic view of a wind power generating system according to a ninth embodiment of the present invention.

### DETAILED DESCRIPTION OF THE PREFERRED EMBODIMENTS

The electrical machine system according to the present invention includes two AC excitation type electrical machines in a brushless design having different diameters from each other, and an electric power converter which is placed in an electrical machine having the larger diameter and rotates with a rotor, and has a cooling structure with higher cooling performance for these electrical machines and the electric power converter than conventional ones. Moreover, the wind power generating system according to the present invention includes such an electrical machine system.

The electrical machine system and wind power generating system according to embodiments of the present invention will be described below with reference to drawings. It should be noted that in the drawings for explaining the embodiments of the present invention, identical or corresponding components are referred to by identical numerals, and repeated explanation about these components is omitted in some cases.

### [First Embodiment]

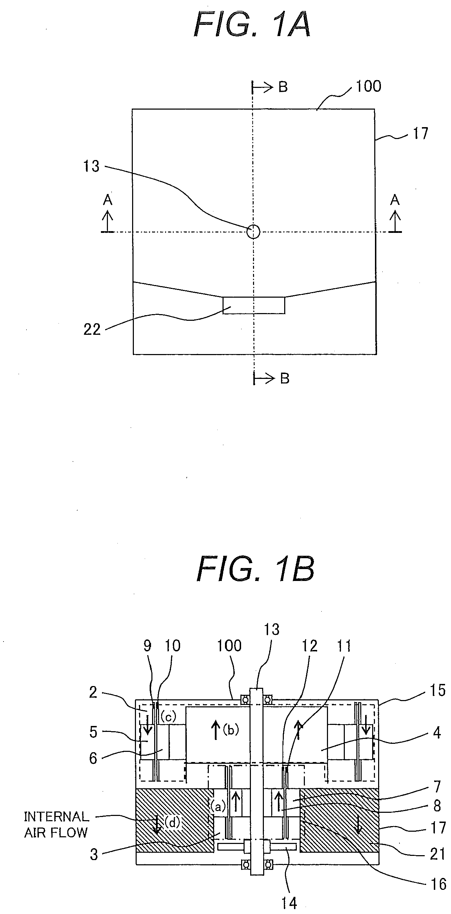

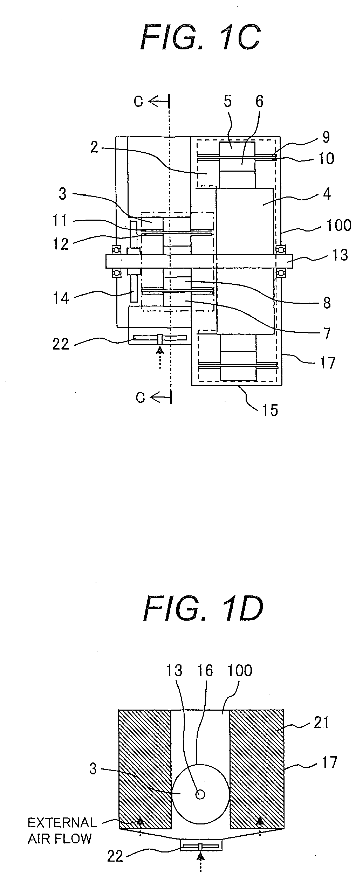

Figs. 1A to 1D are a front view and cross-sectional views of an electrical machine system 100 according to a first embodiment of the present invention. Fig. 1A is a front view, while Fig. 1B is a cross-sectional view taken along line A-A in Fig. 1A. Fig. 1C is a cross-sectional view taken along line B-B in Fig. 1A, and Fig. 1D is a cross-sectional view taken along line C-C in Fig. 1C.

As shown in Figs. 1A to 1D, the electrical machine system 100 of this embodiment includes a main generator 2 which is a first electrical machine, an auxiliary generator 3 which is a second electrical machine, an electric power converter 4, an internal fan 14, and a heat exchanger 21. These components are installed inside a frame 17 of the electrical machine system 100. The outer periphery of the electrical machine system 100 is surrounded by the frame 17 of the electrical machine system 100. The electrical machine system 100 further includes a shaft 13. Themain generator 2, the auxiliary generator 3, an electric power converter 4 and the internal fan 14 are mechanically connected to the shaft 13. The main generator 2 and the auxiliary generator 3 are AC excitation type electrical machines in the brushless design. The electric power converter 4, which is a heat source, is placed in the space on the inner side of the main generator 2 (a space between the inner periphery of the annular main generator 2 and the shaft 13).

The main generator 2 (the first electrical machine), which is indicated by the broken line in Figs. 1B and 1C, is connected to the shaft 13 and serves as a generator for transferring generated output to the electric power system. The main generator 2 includes a main generator stator 5, a main generator rotor 6 disposed with a predetermined distance from the main generator stator 5 on the inner side of the main generator stator 5, a three-phase main generator stator winding 9 wound in two layers in a slot provided with the main generator stator 5, and a three-phase main generator rotor winding 10 wound in two layers in a slot provided in the main generator rotor 6. The main generator rotor 6 is mechanically connected to the shaft 13. It should be noted that the phases of the three-phase main generator stator winding 9 and the three-phase main generator rotor winding 10 are electrically arranged at 120 ° intervals. The outer periphery of the main generator 2 is surrounded by a main generator frame 15 (Figs. 1B, 1C).

The auxiliary generator 3 (the second electrical machine), which is indicated by the chain line in Fig. 1B and 1C, is connected to the shaft 13 next to the main generator 2 and serves as an exciter and a generator. The auxiliary generator 3 includes, as with the main generator 2, an auxiliary generator stator 7, an auxiliary generator rotor 8 disposed with a predetermined distance from the auxiliary generator stator 7 on the inner side of this auxiliary generator stator 7, a three-phase auxiliary generator stator winding 11 wound in two layers in the slot provided in the auxiliary generator stator 7, and a three-phase auxiliary generator rotor winding 12 wound in two layers in the slot provided in the auxiliary generator rotor 8. The auxiliary generator rotor 8 is mechanically connected to the shaft 13. It should be noted that the phases of the three-phase auxiliary generator stator winding 11 and three-phase auxiliary generator rotor winding 12 are electrically arranged at 120° intervals. The outer periphery of the auxiliary generator 3 is surrounded by an auxiliary generator frame 16 (Figs. 1B, 1D).

The electric power converter 4 is placed in the space on the inner side of the main generator rotor 6 (the space between the inner periphery of the annular main generator rotor 6 and the shaft 13), connected to the shaft 13, and electrically connected to the main generator 2 and the auxiliary generator 3, and converts AC signals into DC signals or DC signals into AC signals. The electric power converter 4 is electrically connected to the main generator rotor winding 10 of the main generator 2 and the auxiliary generator rotor winding 12 of the auxiliary generator 3. For example, the electric power converter 4 changes the rotational speeds of the main generator rotor 6 and the auxiliary generator rotor 8 to optimum rotational speeds to suit the wind speed.

The heat exchanger 21 is placed on the outer side of the auxiliary generator frame 16 (a space on the outer side of the auxiliary generator 3). The internal air, which is the air inside the electrical machine system 100, and the external air, which is the air outside the electrical machine system 100, flow into the heat exchanger 21. For example, the heat exchanger 21 is annular and can be placed to surround the auxiliary generator 3. The heat exchanger 21 cools the internal air (cooling air) which cooled the auxiliary generator 3, the electric power converter 4, and the main generator 2 by heat-exchange between the internal air and the external air. The external air is flowed to the heat exchanger 21 by an external fan 22. The external fan 22 is provided on the frame 17 of the electrical machine system 100, positioned on the outside of the electrical machine system 100, and driven by external drive mechanisms or power sources (for example, motors, etc.), which are not illustrated in Figs. 1A to 1D.

The internal fan 14 is provided inside the electrical machine system 100 next to the auxiliary generator 3, connected to the shaft 13, and circulates the cooling air (internal air) which has passed through the heat exchanger 21 within the electrical machine system 100. The internal fan 14 can be adjusted in shape and size by having a fan guide.

A partition is provided inside the electrical machine system 100, and a passage for circulating cooling air (internal air) is formed in the electrical machine system 100. The cooling air is driven by the internal fan 14, flowing through this passage and circulating in the electrical machine system 100 in the order of the auxiliary generator 3, the electric power converter 4, the main generator 2, and the heat exchanger 21 to cool these devices. The cooling air is cooled by the heat exchanger 21 with external air, and flows through the passage again to circulate in the electrical machine system 100. In the description below, although the passage will not be referred to, the cooling air is driven by the internal fan 14 and flows through the passage to circulate inside the electrical machine system 100.

As shown in Fig. 1B, the auxiliary generator 3, which has a configuration similar to that of the main generator 2, is different from the main generator 2 in that the outer diameter of the auxiliary generator stator 7 is smaller than the outer diameter of the main generator stator 5 and the outer diameter of the auxiliary generator 3 is smaller than the outer diameter of the main generator 2. In a wind power generating system, the electrical machine system 100 is placed in a nacelle which is on the tower, and therefore it is preferable that the size of the electrical machine system 100 is small. However, the main generator 2 which serves as a generator for transferring generated output to the electric power system needs a certain size for generating the power required by the system. To this end, the overall size of the electrical machine system 100 is reduced by decreasing the outer diameter of the auxiliary generator 3 which serves as a generator and exciter for controlling the main generator 2 and driving the electric power converter 4.

Moreover, as shown in Fig. 1B, the main generator 2 and the electric power converter 4 positioned within the main generator 2, the auxiliary generator 3, and the internal fan 14 are connected to the shaft 13 in this order. The electric power converter 4 is placed in the space on the inner side of the main generator 2, and is mechanically connected to the inside of the main generator 2 and is mechanically connected to the shaft 13.

The main generator 2 and the auxiliary generator 3 are different from each other in size in the radial direction, and as described above, the outer diameter of the auxiliary generator 3 is smaller than that of the main generator 2. The heat exchanger 21 is provided in the space on the outer side of the auxiliary generator 3, and the total size of the auxiliary generator 3 and the heat exchanger 21 in the radial direction (direction perpendicular to the shaft 13) is nearly equal to the size of the main generator 2 in the radial direction. That is, the heat exchanger 21 is provided on the outer side of the auxiliary generator frame 16 (the space on the outer side of the auxiliary generator 3) so that the position of the outer diameter of the main generator 2 (the position of the main generator frame 15 in the radial direction) and the position of the outer diameter of the heat exchanger 21 (the position of the frame of the heat exchanger 21 in the radial direction) are approximately equal.

Next, the cooling structure of the electrical machine system 100 of this embodiment will be described. In the electrical machine system 100 of this embodiment, the cooling air (internal air) cooled by the heat exchanger 21 with external air is circulated within the electrical machine system 100 by the internal fan 14 and cools the auxiliary generator 3, the electric power converter 4, and the main generator 2. In Fig. 1B, this flow of the cooling air is indicated by the solid arrows. As indicated by the arrows a to d in Fig. 1B, the cooling air cooled by the heat exchanger 21 circulates in the electrical machine system 100 in the order of the auxiliary generator 3 (arrow a), the electric power converter 4 (arrow b), the main generator 2 (arrow c), and the heat exchanger 21 (arrow d) by the internal fan 14, and is cooled by the heat exchanger 21 again.

The heat exchanger 21 cools the cooling air (internal air) by exchanging the heat of the cooling air with the external air flowed by the external fan 22. In Figs. 1C and 1D, this flow of the external air is indicated by the broken line arrows.

As described above, the electrical machine system 100 of this embodiment includes the heat exchanger 21 on the outer side of the auxiliary generator 3, and has a cooling structure for circulating the cooling air cooled by the heat exchanger 21 by the internal fan 14 inside the electrical machine system 100. Accordingly, the electrical machine system 100 has higher cooling performance than conventional ones for the main generator 2, the auxiliary generator 3 and the electric power converter 4 even if an AC excitation type electrical machine in the brushless design is included and the electric power converter 4 which is a heat source is placed on the inner side of the main generator 2. That is, the electrical machine system 100 of this embodiment has a structure suitable to include an AC excitation type electrical machine in the brushless design and advantageously has improved cooling performance than conventional electrical machine systems which include an AC excitation type electrical machine in the brushless design. Moreover, since the heat exchanger 21 is placed on the outer side of the auxiliary generator 3 whose outer diameter is smaller than that of the main generator 2, the electrical machine system 100 of this embodiment has an advantage that the overall size (physique) of the electrical machine system 100 can be reduced.

### [Second Embodiment]

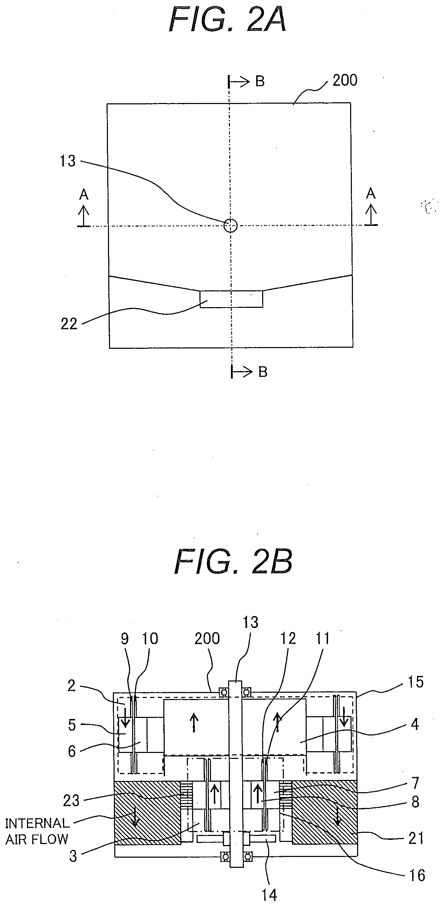

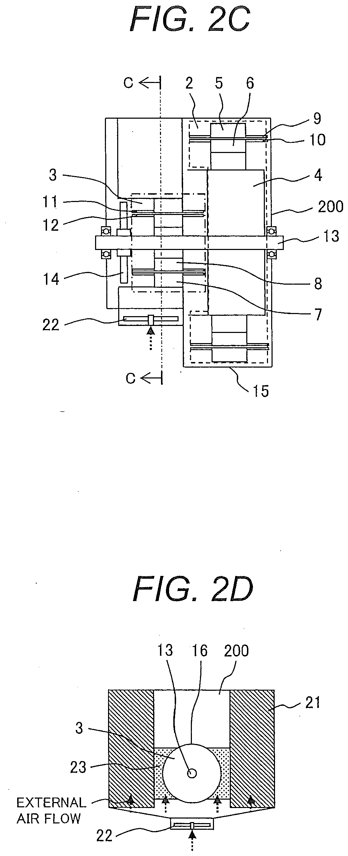

Figs. 2A to 2D are a front view and cross-sectional views of an electrical machine system 200 according to a second embodiment of the present invention. Fig. 2A is a front view, while Fig. 2B is a cross-sectional view taken along line A-A in Fig. 2A. Fig. 2C is a cross-sectional view taken along line B-B in Fig. 2A, and Fig. 2D is a cross-sectional view taken along line C-C in Fig. 2C.

As shown in Fig. 2A to 2D, the electrical machine system 200 of this embodiment has an approximately identical structure as the electrical machine system 100 of the first embodiment described with reference to Figs. 1A to 1D, but differs from the one of the first embodiment in the following point. That is, the electrical machine system 200 of this embodiment, as shown in Figs. 2B and 2D, includes an auxiliary generator cooling fin (or fins) 23 which is provided on the outer periphery of the auxiliary generator frame 16 and positioned between the auxiliary generator frame 16 and the heat exchanger 21. The auxiliary generator ,cooling fin 23 is a cooling fin provided with plural projecting members. The projecting members may have any shape and size. For example, the projecting members may have any shape selected from plate, bar, plane, and curve. In the electrical machine system 200 of this embodiment, as in the electrical machine system 100 of the first embodiment, external air is flowed to the heat exchanger 21 by the external fan 22, heat exchange is performed between the cooling air (internal air) in the electrical machine system 200 and external air by the heat exchanger 21, and this cooling air is cooled. Further, in the electrical machine system 200 of this embodiment, as shown in Fig. 2D, the external air flowed by the external fan 22 branches into the direction flowing to the heat exchanger 21 and the direction flowing to the auxiliary generator cooling fin 23, and the external air flowing to the auxiliary generator cooling fin 23 cools the auxiliary generator 3.

The electrical machine system 200 of this embodiment shows even higher cooling performance than conventional ones for the auxiliary generator 3 because the electrical machine system 200 concurrently employs cooling (ventilation cooling) by the internal air in the electrical machine system 200 and cooling (housing cooling) by external air on the outside of the electrical machine system 200 using the auxiliary generator cooling fin 23.

### [Third Embodiment]

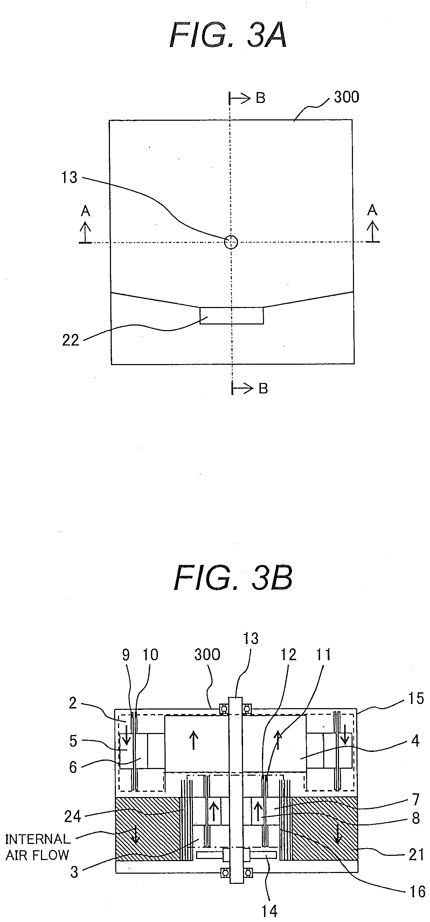

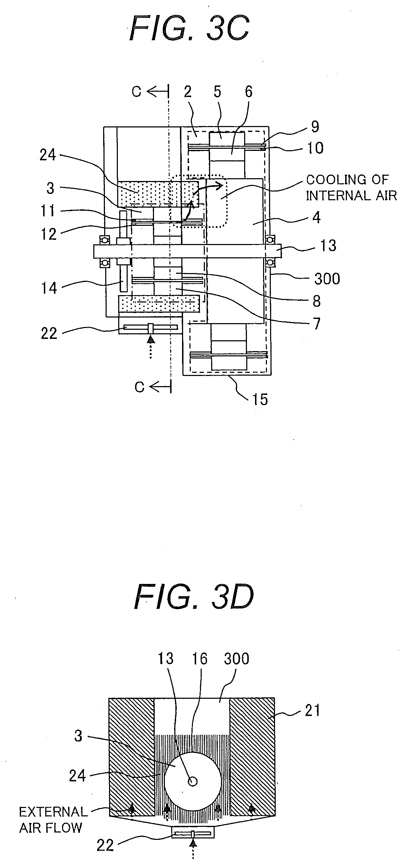

Figs. 3A to 3D are a front view and cross-sectional views of an electrical machine system 300 according to a third embodiment of the present invention. Fig. 3A is a front view, while Fig. 3B is a cross-sectional view taken along line A-A in Fig. 3A. Fig. 3C is a cross-sectional view taken along line B-B in Fig. 3A, and Fig. 3D is a cross-sectional view taken along line C-C in Fig. 3C.

As shown in Figs. 3A to 3D, the electrical machine system 300 of this embodiment has an approximately identical structure as the electrical machine system 100 of the first embodiment described with reference to Figs. 1A to 1D, but differs from the one of the first embodiment in the following point. That is, the electrical machine system 300 of this embodiment, as shown in Figs. 3B and 3C, includes electric power converter cooling fins 24 on the main generator frame 15.

The electric power converter cooling fins 24 are provided on both sides of the main generator frame 15 to position on the inside and the outside of the main generator 2. In the main generator 2, where the cooling air (internal air) is cooled by the transmission of the heat of the cooling air to external air via the main generator frame 15, the cooling performance of the cooling air by external air is increased by providing the electric power converter cooling fins 24 on the inside and the outside of the main generator 2 to increase the area of heat transfer. The electric power converter cooling fins 24 are a cooling fin provided with plural projecting members. The projecting members may have any shape and size. For example, the projecting members may have any shape selected from plate, bar, plane, and curve.

The electric power converter cooling fin (or fins) 24 provided on one side of the main generator frame 15 to position on the outside of the main generator 2 is, as shown in Figs. 3B to 3D, placed to extend from the side of the main generator frame 15 to a space between the auxiliary generator frame 16 and the heat exchanger 21 (on the outer periphery of the auxiliary generator frame 16). The electric power converter cooling fin (or fins) 24 provided on the other side of the main generator frame 15 to position on the inside of the main generator 2 extends to the vicinity of the electric power converter 4.

In the electrical machine system 300 of this embodiment, as shown in Fig. 3D, the external air flowed by the external fan 22 branches into the direction flowing to the heat exchanger 21 and the direction flowing to the electric power converter cooling fin 24 provided on one side of the main generator frame 15 to position on the outside of the main generator 2, also flowing to the electric power converter cooling fin 24 provided on one side of the main generator frame 15 to position on the outside of the main generator 2. The cooling air (internal air), as shown in Fig. 3C, flows over the auxiliary generator 3, flows over the electric power converter cooling fin 24 provided on one side of the main generator frame 15 to position on the inside of the main generator 2, and then flows to the electric power converter 4 by the internal fan 14. At this time, the heat of the cooling air is efficiently transmitted to the main generator frame 15 by the electric power converter cooling fin 24 provided on one side of the main generator frame 15 to position on the inside of the main generator 2. The heat transmitted to the main generator frame 15 is efficiently cooled with external air by the electric power converter cooling fin 24 provided on one side of the main generator frame 15 to position on the outside of the main generator 2. That is, the cooling air is efficiently cooled with external air by the electric power converter cooling fins 24 provided on both sides of the main generator frame 15 to position on the inside and the outside of the main generator 2, and then flows to the electric power converter 4 and cools the electric power converter 4.

The electrical machine system 300 of this embodiment shows even higher cooling performance than conventional ones for the electric power converter 4 because the electrical machine system 300 includes the electric power converter cooling fins 24 and the cooling air (internal air) flowing in the electrical machine system 300 radiates heat to external air at the electric power converter cooling fins 24 to lower the temperature of the cooling air before flowing into the electric power converter 4.

### [Fourth Embodiment]

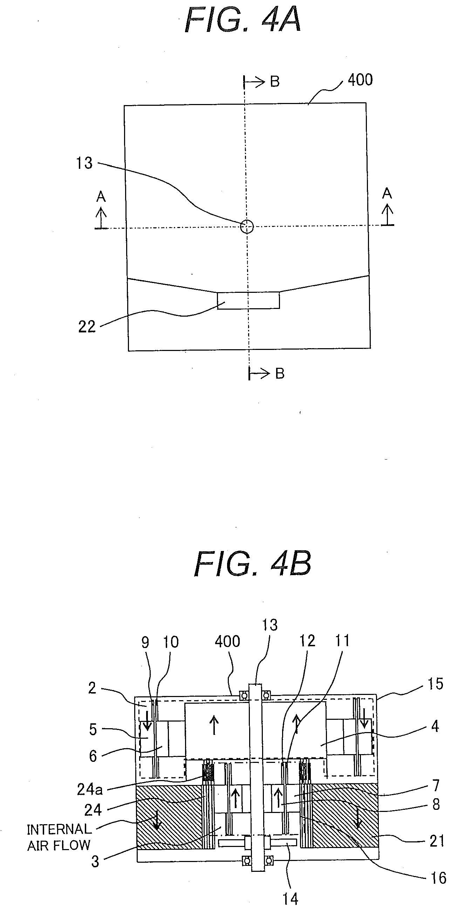

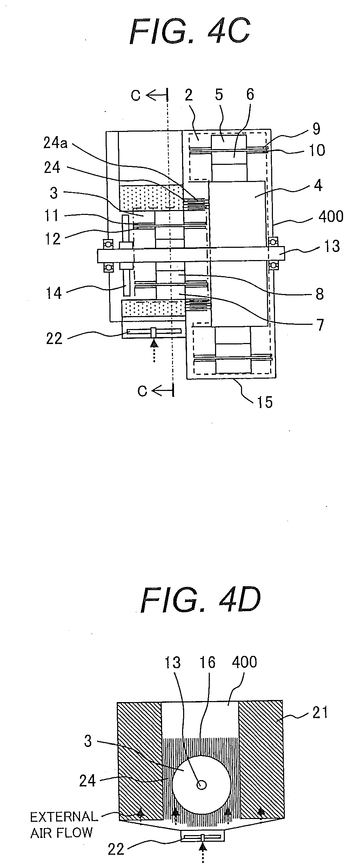

Figs. 4A to 4D are a front view and cross-sectional views of an electrical machine system 400 according to a fourth embodiment of the present invention. Fig. 4A is a front view, while Fig. 4B is a cross-sectional view taken along line A-A in Fig. 4A. Fig. 4C is a cross-sectional view taken along line B-B in Fig. 4A, and Fig. 4D is a cross-sectional view taken along line C-C in Fig. 4C.

As shown in Figs. 4A to 4D, the electrical machine system 400 of this embodiment has an approximately identical structure as the electrical machine system 300 of the third embodiment described with reference to Figs. 3A to 3D, but differs from the one of the third embodiment in the following point. That is, the electrical machine system 400 of this embodiment, as shown in Figs. 4B and 4C, not only includes the electric power converter cooling fins 24 on both sides of the main generator frame 15 but also includes an electric power converter cooling fin (or fins) 24a on the electric power converter 4. That is, the electrical machine system 400 of this embodiment includes the electric power converter cooling fins 24 provided on both sides of the main generator frame 15 (the inside and outside of the main generator 2) as in the electrical machine system 300 of the third embodiment, and includes the electric power converter cooling fin (or fins) 24a placed in the electric power converter 4.

The electric power converter cooling fin 24a placed in the electric power converter 4 is placed, from the electric power converter 4, facing the electric power converter cooling fin 24 provided on one side of the main generator frame 15 to position on the inside of the main generator 2. The electric power converter cooling fin 24a placed in the electric power converter 4 is a cooling fin provided with plural projecting members. The projecting members may have any shape and size. For example, the projecting members may have any shape selected from plate, bar, plane, and curve.

In the electric power converter cooling fin 24a placed in the electric power converter 4, each of the projecting members is disposed to position between the projecting members of the electric power converter cooling fin 24 provided on one side of the main generator frame 15 to position on the inside of the main generator 2. Thus, the electric power converter cooling fin 24a placed in the electric power converter 4 and the electric power converter cooling fin 24 provided on one side of the main generator frame 15 to position on the inside of the main generator 2 are arranged so that their projecting members face each other and engage with each other.

During the rotation of the electrical machine system 400, the electric power converter cooling fin 24a placed in the electric power converter 4 rotates with the electric power converter 4 when the electric power converter 4 rotates with the rotation of the shaft 13, while the electric power converter cooling fin 24 provided on one side of the main generator frame 15 to position on the inside of the main generator 2 does not rotate and stay still. Accordingly, when the electrical machine system 400 rotates, flow of internal air is generated between the electric power converter cooling fins 24a and 24. Then, the heat of the electric power converter 4 flows from the electric power converter cooling fin 24a placed in the electric power converter 4 to the electric power converter cooling fin 24 provided on one side of the main generator frame 15 to position on the inside of the main generator 2, and flows to the electric power converter cooling fin 24 provided on one side of the main generator frame 15 to position on the outside of the main generator 2 to be transmitted to the external air flowed by the external fan 22, and is efficiently cooled by external air.

The electrical machine system 400 of this embodiment shows even higher cooling performance than conventional ones for the electric power converter 4 because the electrical machine system 400 includes the electric power converter cooling fins 24 placed on both sides of the main generator frame 15 and the electric power converter cooling fin 24a placed in the electric power converter 4 to lower the heat resistance from the electric power converter 4 to external air.

### [Fifth Embodiment]

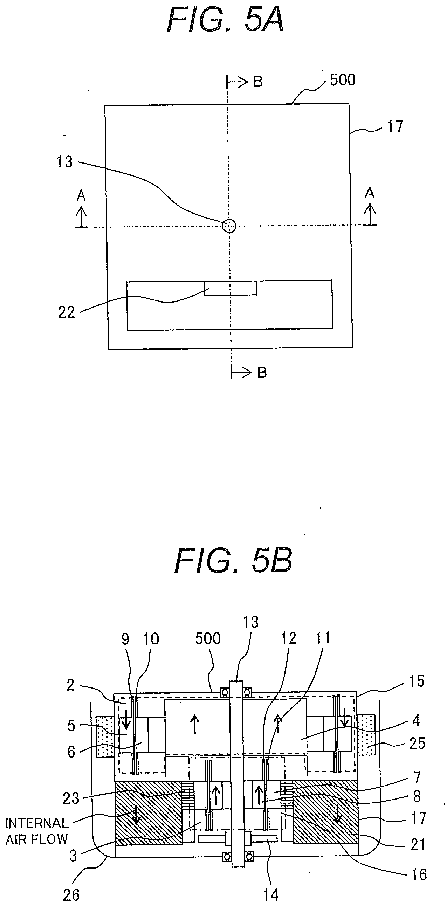

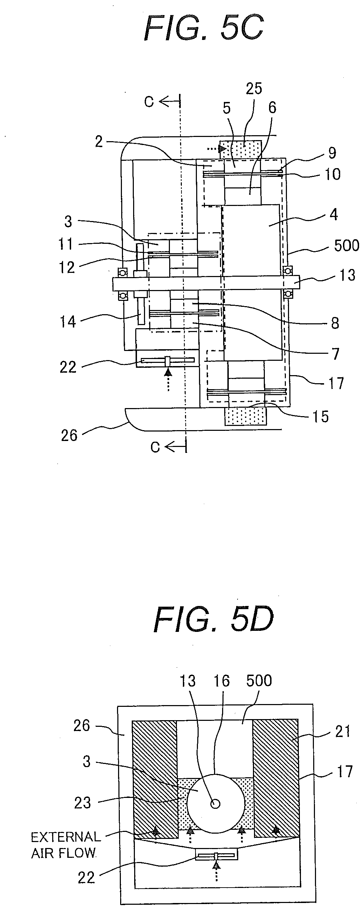

Figs. 5A to 5D are a front view and cross-sectional views of an electrical machine system 500 according to a fifth embodiment of the present invention. Fig. 5A is a front view, while Fig. 5B is a cross-sectional view taken along line A-A in Fig. 5A. Fig. 5C is a cross-sectional view taken along line B-B in Fig. 5A, and Fig. 5D is a cross-sectional view taken along line C-C in Fig. 5C.

As shown in Figs. 5A to 5D, the electrical machine system 500 of this embodiment has an approximately identical structure as the electrical machine system 200 of the second embodiment described with reference to Figs. 2A to 2D, but differs from the one of the second embodiment in the following point. That is, the electrical machine system500 of this embodiment includes, as shown in Figs. 5B to 5D, a main generator cooling fin (or fins) 25 on the outer periphery of the main generator frame 15, and includes an external air cover 26 on the frame 17 of the electrical machine system 500. The main generator cooling fin 25 is a cooling fin provided with plural projecting members. The proj ectingmembers may have any shape and size. For example, the projecting members may have any shape selected from plate, bar, plane, and curve.

The external air cover 2 6 covers at least the main generator cooling fin 25 and part of the heat exchanger 21 and guides the flow of external air so that the external air flows to the main generator cooling fin 25. The main generator cooling fin 25 guides external air to flow to the sides of the main generator 2 to cool the main generator 2. That is, the external air flowed by the external fan 22 flows over the heat exchanger 21 and the auxiliary generator cooling fin 23 (Fig. 5D), is guided by the external air cover 26 to flow to the main generator cooling fin 25 (Fig. 5C), and cools the main generator 2.

The electrical machine system 500 of this embodiment shows even higher cooling performance than conventional ones because the electrical machine system 500 includes the main generator cooling fin 25 and the external air cover 26, and concurrently employs, for the main generator 2, cooling (ventilation cooling) by internal air inside the electrical machine system 500 and cooling (housing cooling) by external air outside the electrical machine system 500 to actively cool the main generator 2 with external air.

It should be noted that the electrical machine system 500 according to this embodiment does not necessarily include the auxiliary generator cooling fin 23. That is, the electrical machine system 500 of this embodiment may have a configuration to include the main generator cooling fin 25 on the outer periphery of the main generator frame 15 and include the external air cover 26 on the outside of the main generator cooling fin 25 in the electrical machine system 100 according to the first embodiment described with reference to Figs. 1A to 1D. Even in this structure, external air flows over the heat exchanger 21, guided by the external air cover 26 to flow to the main generator cooling fin 25, and cooling the main generator 2.

### [Sixth Embodiment]

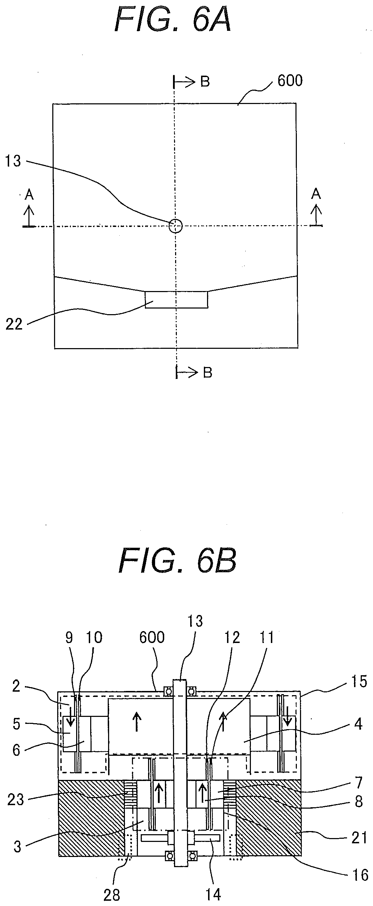

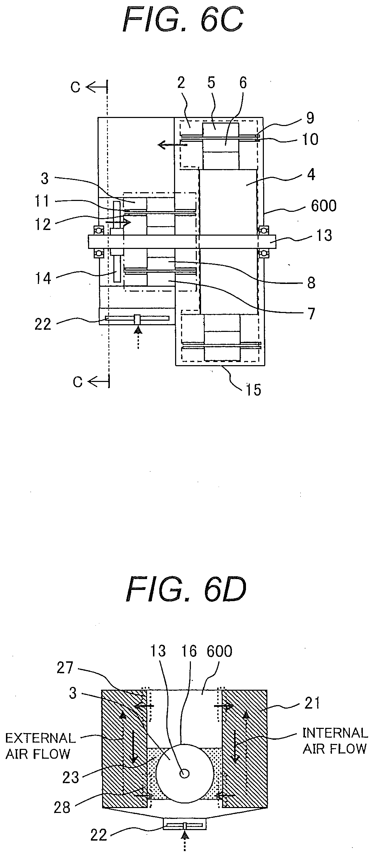

Figs. 6A to 6D are a front view and cross-sectional views of an electrical machine system 600 according to a sixth embodiment of the present invention. Fig. 6A is a front view, while Fig. 6B is a cross-sectional view taken along line A-A in Fig. 6A. Fig. 6C is a cross-sectional view taken along line B-B in Fig. 6A, and Fig. 6D is a cross-sectional view taken along line C-C in Fig. 6C.

As shown in Figs. 6A to 6D, the electrical machine system 600 of this embodiment has an approximately identical structure as the electrical machine system 200 of the second embodiment described with reference to Figs. 2A to 2D, but differs from the one of the second embodiment in the following point. That is, the electrical machine system 600 of this embodiment includes, as shown in Fig. 6D, a heat exchanger internal air inlet 27 in an upper part of the heat exchanger 21 and a heat exchanger internal air outlet 28 in a lower part of the heat exchanger 21. The heat exchanger internal air inlet 27 is an opening portion provided in an upper part of the frame of the heat exchanger 21, while the heat exchanger internal air outlet 28 is an opening portion provided in a lower part of the frame of the heat exchanger 21.

In the electrical machine system 600 of this embodiment, as described with reference to Fig. 1B in the first embodiment, internal air (cooling air) flows from the main generator 2 to the heat exchanger 21 by the internal fan 14. At this time, the internal air flows from the main generator 2 through the heat exchanger internal air inlet 27 in an upper part of the heat exchanger 21 into the heat exchanger 21, and flows out from the heat exchanger 21 through the heat exchanger internal air outlet 28 in a lower part of the heat exchanger 21 (Fig. 6B, Fig. 6D). That is, the internal air is driven by the internal fan 14 and flows from top to bottom in the heat exchanger 21 (Fig. 6D). In contrast, external air is driven by the external fan 22 and flows frombottom to top (Fig. 6D) in the heat exchanger 21.

Buoyancy acts on air in the downward direction when the temperature is low and in the upward direction when the temperature is high due to density difference. Accordingly, in the heat exchanger 21, the internal air is cooled by external air and buoyancy acts on the internal air in the downward direction, while external air is heated by the internal air and buoyancy acts on the external air in the upward direction.

Therefore, in the electrical machine system 600 of this embodiment, the directions of flows of the internal air and the external air formed by the heat exchanger internal air inlet 27 and the heat exchanger internal air outlet 28 and the directions of flows of the internal air and the external air due to buoyancy coincide within the heat exchanger 21, respectively. Accordingly, the electrical machine system 600 of this embodiment shows even higher cooling performance than conventional ones for the main generator 2, the auxiliary generator 3, and the electric power converter 4 because the electrical machine system 600 includes the heat exchanger internal air inlet 27 and the heat exchanger internal air outlet 28 to increase the amounts of ventilation of the internal air and the external air.

It should be noted that the electrical machine system 600 according to this embodiment does not necessarily include the auxiliary generator cooling fin 23. That is, the electrical machine system 600 of this embodiment may have a configuration to include the heat exchanger internal air inlet 27 in an upper part of the heat exchanger 21 and the heat exchanger internal air outlet 28 in a lower part of the heat exchanger 21 in the electrical machine system 100 according to the first embodiment described with reference to Figs. 1A to 1D. Even in this structure, the amounts of ventilation of the internal air and the external air is increased and higher cooling performance is obtained than conventional ones for the main generator 2, the auxiliary generator 3, and the electric power converter 4.

### [Seventh Embodiment]

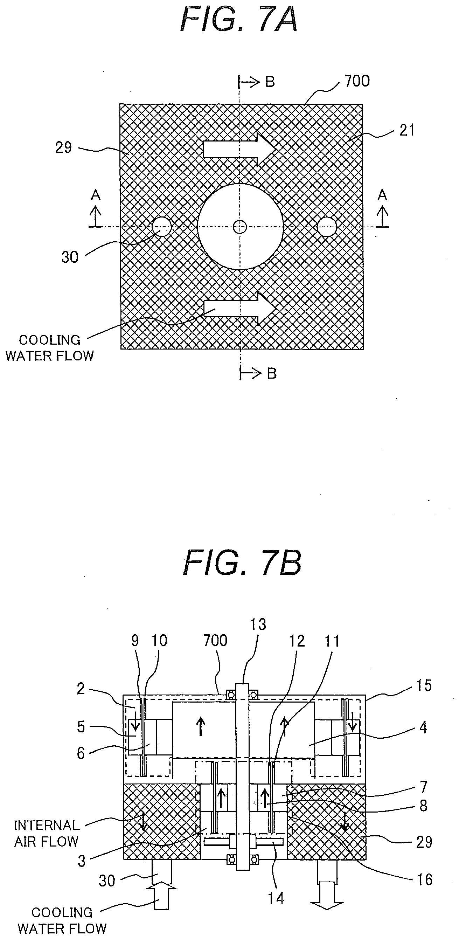

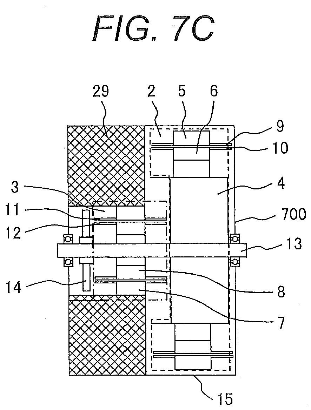

Figs. 7A to 7C are a front view and cross-sectional views of an electrical machine system 700 according to a seventh embodiment of the present invention. Fig. 7A is a front view, while Fig. 7B is a cross-sectional view taken along line A-A in Fig. 7A and Fig. 7C is a cross-sectional view taken along line B-B in Fig. 7A.

As shown in Figs. 7A to 7C, an electrical machine system 700 of this embodiment has an approximately identical structure as the electrical machine system 100 of the first embodiment described with reference to Figs. 1A to 1D, but differs from the one of the first embodiment in the following point. That is, the electrical machine system 700 of this embodiment includes, as shown in Figs. 7A to 7C, a water-cooling heat exchanger 29 and a refrigerant piping 30, but does not include the heat exchanger 21 and the external fan 22. The electrical machine system 700 of this embodiment does not air-cool the internal air by the heat exchanger 21, but water-cools the internal air by the water-cooling heat exchanger 29. In general, water-cooling has higher cooling performance than air-cooling. Therefore, the electrical machine system 700 of this embodiment can cool the internal air more efficiently.

The water-cooling heat exchanger 29 is placed on the outer side of the auxiliary generator frame 16 (a space on the outer side of the auxiliary generator 3) as the heat exchanger 21 in the first embodiment. The cooling air (internal air) which cooled the auxiliary generator 3, the electric power converter 4, and the main generator 2 flows in the water-cooling heat exchanger 29, and the water-cooling heat exchanger 29 cools this cooling air by exchanging the heat between this cooling air and the cooling water. For example, the water-cooling heat exchanger 29 is annular and placed to surround the auxiliary generator 3. The water-cooling heat exchanger 29 is connected to the refrigerant piping 30 and provided with the cooling water from outside through the refrigerant piping 30. The cooling water flows through the refrigerant piping 30 by a circulation mechanism (for example, pump, etc.), which is not illustrated in Figs. 7A to 7C, provided on the outside of the electrical machine system 700.

The water-cooling heat exchanger 29 is, as the heat exchanger 21 of the first embodiment, provided in the space on the outer side of the auxiliary generator 3, and the total size of the auxiliary generator 3 and the water-cooling heat exchanger 29 in the radial direction (direction perpendicular to the shaft 13) is nearly equal to the size of the main generator 2 in the radial direction. That is, the water-cooling heat exchanger 29 is provided on the outer side of the auxiliary generator frame 16 (the space on the outer side of the auxiliary generator 3) so that the position of the outer diameter of the main generator 2 (the position of the main generator frame 15 in the radial direction) and the position of the outer diameter of the water-cooling heat exchanger 29 are approximately equal. In the electrical machine system 700 of this embodiment, since the internal air which is the cooling air is water-cooled by the water-cooling heat exchanger 29, the heat resistance of the heat exchanger is smaller than a case the internal air is air-cooled, and the internal air is cooled more efficiently. Accordingly, the electrical machine system 700 of this embodiment shows even higher cooling performance than conventional ones for the main generator 2, the auxiliary generator 3, and the electric power converter 4.

### [Eighth Embodiment]

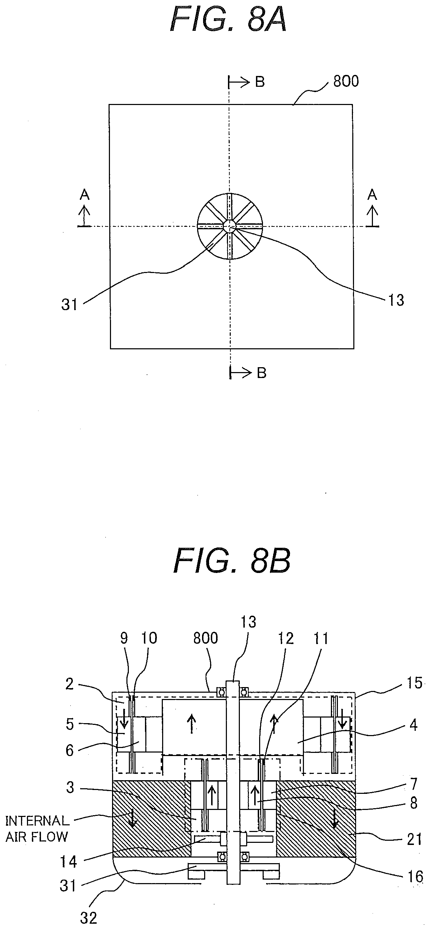

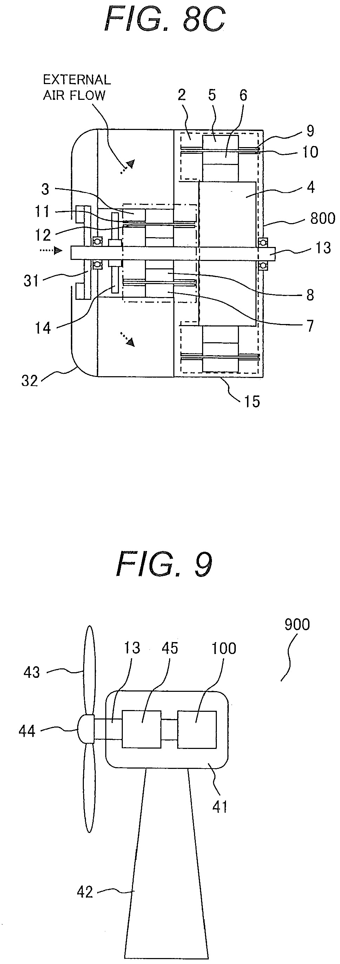

Figs. 8A to 8C are a front view and cross-sectional views of an electrical machine system 800 according to an eighth embodiment of the present invention. Fig. 8A is a front view, while Fig. 8B is a cross-sectional view taken along line A-A in Fig. 8A, and Fig. 8C is a cross-sectional view taken along line B-B in Fig. 8A.

As shown in Figs. 8A to 8C, the electrical machine system 800 of this embodiment has an approximately identical structure as the electrical machine system 100 of the first embodiment described with reference to Figs. 1A to 1D, but differs from the one of the first embodiment in the following point. That is, the electrical machine system 800 of this embodiment includes, as shown in Figs. 8A to 8C, a fan 31 and a fan cover 32, but does not include the external fan 22. The fan 31 is an impeller, fixed onto one end side of the shaft 13 to which the internal fan 14 is connected (fixed closer to the end of the shaft 13 than the internal fan 14 is) next to the internal fan 14, and rotates with the shaft 13. The fan cover 32 is provided on the heat exchanger 21 and covers the outside of the fan 31.

When the fan 31 rotates, external air is guided by the fan cover 32 to flow into the heat exchanger 21 (Fig. 8C) . The external air flowing into the heat exchanger 21 cools the cooling air (internal air) as described in the first embodiment.

In the electrical machine systems of the first to sixth embodiments, the external fan 22 is used for circulating external air, and therefore drive mechanisms and power sources are necessary to drive the external fan 22. When the drive mechanisms and power sources for the external fan 22 break down, external air cannot be circulated and the cooling performance of the electrical machine systems significantly lowers.

In the electrical machine system 800 of this embodiment, since drive mechanisms and power sources for circulating the external air are unnecessary, there is no risk of a decrease in the cooling performance of the electrical machine system 800 caused by breakdown of such drive mechanisms and power sources. Accordingly, the electrical machine system 800 of this embodiment maintains even higher cooling performance and reliability than conventional ones.

### [Ninth Embodiment]

With reference to Fig. 9, a wind power generating system according to an embodiment of the present invention will be described in a ninth embodiment. The wind power generating system according to the present invention has an AC excitation type electrical machine in the brushless design and includes an electrical machine system having higher cooling performance than conventional ones. An electrical machine system included in a wind power generating system according to the present invention is any one of the electrical machine systems 100 to 800 of the first to eighth embodiments. In this embodiment, the wind power generating system is considered to include the electrical machine system 100 described in the first embodiment, and descriptions of the electrical machine system 100 will be omitted here.

It should be noted that an electrical machine system according to the present invention is not only applied to the wind power generating system described in this embodiment, but also applied to waterwheels, engines, turbines and others.

Fig. 9 is a schematic view of the wind power generating system 900 according to this embodiment. The wind power generating system 900 according to this embodiment includes a nacelle 41, a tower 42, and plural blades 43. The nacelle 41 is supported by the tower 42 and includes the electrical machine system 100 and a gearbox 45 therein. The gearbox 45 is connected to the shaft 13 of the electrical machine system 100. The blades 43 are connected to the shaft 13 by a hub 44 and rotated by wind to rotate the shaft 13.

A windmill is constituted by the blades 43 and the shaft 13. The blades 43 receive wind and rotate so that wind power energy is converted into rotation energy to rotate the shaft 13. The gearbox 45 connected to the shaft 13 increases the rotation of the shaft 13 to a rotational speed suitable for power generation. The electrical machine system 100 connected to the gearbox 45 converts the rotation energy of the shaft 13 into electric energy.

The wind power generating system 900 according to this embodiment generates electric power by converting the rotation energy, which has been converted from the wind power energy by the blades 43 and the shaft 13, into electric energy by the electrical machine system 100.

According to this embodiment, a wind power generating system including an electrical machine system is achieved which has an AC excitation type electrical machine in the brushless design and improved cooling performance than conventional ones, reduces the load for maintenance, and improves power generation efficiency and reliability for the wind power generating system.

It should be noted that the present invention is not limited to the above-described embodiments and includes various variants. For example, the above-mentioned embodiments are detailed description of the present invention for easy understanding and are not necessarily limited to those which have all the elements described. Moreover, part of the elements of certain embodiment can be replaced with the elements of other embodiments, and the elements of certain embodiment may additionally have the elements of other embodiments. In addition, part of the elements of each embodiment may be added to, deleted from, or replaced with other elements.

### EXPLANATION OF REFERENCE CHARACTERS

- 2:: main generator
- 3:: auxiliary generator
- 4:: electric power converter
- 5:: main generator stator
- 6:: main generator rotor
- 7:: auxiliary generator stator
- 8:: auxiliary generator rotor
- 9:: main generator stator winding
- 10:: main generator rotor winding
- 11:: auxiliary generator stator winding
- 12:: auxiliary generator rotor winding
- 13:: shaft
- 14:: internal fan
- 15:: main generator frame
- 16:: auxiliary generator frame
- 17:: frame of electrical machine system
- 21:: heat exchanger
- 22:: external fan
- 23:: auxiliary generator cooling fin
- 24, 24a:: electric power converter cooling fin
- 25:: main generator cooling fin
- 26:: external air cover
- 27:: heat exchanger internal air inlet
- 28:: heat exchanger internal air outlet
- 29:: water-cooling heat exchanger
- 30:: refrigerant piping
- 31:: fan
- 32:: fan cover
- 41:: nacelle
- 42:: tower
- 43:: blade
- 44:: hub
- 45:: gearbox
- 100, 200, 300, 400, 500, 600, 700, 800:: electrical machine system
- 900:: wind power generating system

## Claims

1. An electrical machine system comprising:
- a first electrical machine (2);
- a second electrical machine (3) provided next to the first electrical machine (2) ;
- an electric power converter (4);
- and a shaft (13);
- wherein each of the first electrical machine (2) and the second electrical machine (3) includes a stator (5, 7) having a winding and an iron core, a rotor (6, 8) having a winding and an iron core and disposed on the inner side of the stator (5, 7), and an outer periphery surrounded by a frame (15, 16),
- wherein the rotor (6) of the first electrical machine (2) and the rotor (8) of the second electrical machine (7) are mechanically connected to the shaft (13),
- wherein the stator of the second electrical machine (3) has a smaller outer diameter than the stator (6) of the first electrical (2) machine has,
- wherein the electric power converter (4) is mechanically connected to the shaft (13) and placed in the space on the inner side of the rotor (6) of the first electrical machine (3), and is electrically connected to the winding of the rotor (6) of the first electrical machine (2) and the winding of the rotor (8) of the second electrical machine (7), **characterized in that** it further comprises
- an internal fan (14) provided next to the second electrical machine, and
- a heat exchanger (21);
- wherein the internal fan (14) is mechanically connected to the shaft (13) and circulates internal air into the second electrical machine (3), the electric power converter (4), and the first electrical machine (2), and
- wherein the heat exchanger (21) is placed on the outer side of the second electrical machine (3), external air flowing into the heat exchanger (21) and the internal air circulated by the internal fan (14) flowing into the heat exchanger (21), and the heat exchanger (21) cooling the entered internal air by heat exchange between the entered internal air and the entered external air.

2. The electrical machine system according to claim 1, further comprising:
a cooling fin provided at an outer periphery of the frame (16) of the second electrical machine (3) and positioned between the second electrical machine and the heat exchanger (21), the external air flowing over the cooling fin.

3. The electrical machine system according to claim 1 or claim 2, further comprising:
cooling fins provided on both sides of the frame (15) of the first electrical machine (2) to be positioned on the inside and the outside of the first electrical machine (2),
wherein the cooling fin provided on the outside of the frame (15) of the first electrical machine (2) extends from the frame (15) of the first electrical machine (2) to a position between the second electrical machine (3) and the heat exchanger (21), the external air flowing over the cooling fin, and
wherein the internal air circulated by the internal fan (14) flows over the cooling fin provided on the inside of the frame (15) of the first electrical machine (2).

4. The electrical machine system according to claim 3,
wherein the electric power converter includes a cooling fin (24),
wherein each of the cooling fin (24) of the electric power converter and the cooling fin provided on the inside of the frame (15) of the first electrical machine (2) includes a plurality of projecting members, and
wherein the projecting members of the cooling fin (24) of the electric power converter (4) and the projecting member of the cooling fin provided on the other side of the frame (15) of the first electrical machine (2) to be positioned on the inside of the first electrical machine (2) are disposed to face and engage with each other.

5. The electrical machine system according to claim 1,
a frame (17) surrounding an outer periphery of the electrical machine system;
a cooling fin provided at an outer periphery of the frame (15) of the first electrical machine (2);
an external air cover (26) provided on the frame (17) of the electrical machine system and covering at least the cooling fin and part of the heat exchanger (21); and
an external fan (22) provided on the frame (17) of the electrical machine system,
wherein external air flowed by the external fan (22) is guided by the external air cover to flow over the cooling fin (25).

6. The electrical machine system according to claim 1,
wherein the heat exchanger (21) includes opening portions in an upper part and a lower part thereof,
wherein the internal air circulated by the internal fan (14) flows into the heat exchanger (21) through the opening portion in the upper part, and the entered internal air flows out of the heat exchanger (21) through the opening portion in the lower part.

7. An electrical machine system comprising:
- a first electrical machine (2) ;
- a second electrical machine (3) provided next to the first electrical machine (2) ;
- an electric power converter (4) ;
- and a shaft (13);
- wherein each of the first electrical machine (2) and the second electrical machine (3) includes a stator (5, 7) having a winding and an iron core, a rotor (6, 8) having a winding and an iron core and disposed on the inner side of the stator (5, 7), and an outer periphery surrounded by a frame (15, 16),
- wherein the rotor (6) of the first electrical machine (2) and the rotor (8) of the second electrical machine (7) are mechanically connected to the shaft (13),
- wherein the stator of the second electrical machine (3) has a smaller outer diameter than the stator (6) of the first electrical (2) machine has,
- wherein the electric power converter (4) is mechanically connected to the shaft (13) and placed in the space on the inner side of the rotor (6) of the first electrical machine (3), and is electrically connected to the winding of the rotor (6) of the first electrical machine (2) and the winding of the rotor (8) of the second electrical machine (7), **characterized in that** it further comprises
- an internal fan (14) provided next to the second electrical machine;
- a heat exchanger (29);
- wherein the internal fan (14) is mechanically connected to the shaft (13) and circulates internal air into the second electrical machine (3), the electric power converter (4), and the first electrical machine (2), and
- wherein the heat exchanger (29) is
a water-cooling heat exchanger (29) placed on the outer side of the second electrical machine (3); and
a refrigerant piping (30) connected to the water-cooling heat exchanger (29);
wherein cooling water is provided to the water-cooling heat exchanger (29) with the refrigerant piping (30),
wherein the internal air circulated by the internal fan (14) flows into the water-cooling heat exchanger (29), and
wherein the water-cooling heat exchanger (29) cools the entered internal air by heat exchange between the entered internal air and the cooling water.

8. The electrical machine system according to claim 1, further comprising:
an additional fan (31) provided on one end side of the shaft (13), the internal fan (14) connected to the one end side, and
a fan cover (32) provided on the heat exchanger (21) to cover the additional fan (14).

9. A wind power generating system comprising:
an electrical machine system including a shaft (13) and converting rotation energy of the shaft (13) into electric energy,
a nacelle (41) including the electrical machine system therein,
a tower (42) supporting the nacelle (41), and
a blade (43) connected to the shaft (13) and rotated by wind to rotate the shaft (13),
wherein the electrical machine system is an electrical machine system according to any one of claims 1 to 8.

## Patentansprüche

1. System elektrischer Maschinen, das Folgendes umfasst:
- eine erste elektrische Maschine (2);
- eine zweite elektrische Maschine (3), die benachbart zur ersten elektrischen Maschine (2) vorgesehen ist;
- einen Umsetzer (4) für elektrische Leistung;
- und eine Welle (13);
- wobei die erste elektrische Maschine (2) und die zweite elektrische Maschine (3) jeweils einen Stator (5, 7), der eine Wicklung und einen Eisenkern aufweist, einen Rotor (6, 8), der eine Wicklung und einen Eisenkern aufweist und auf der Innenseite des Stators (5, 7) angeordnet ist, und einen Außenumfang, der von einem Rahmen (15, 16) umgeben ist, enthalten,
- wobei der Rotor (6) der ersten elektrischen Maschine (2) und der Rotor (8) der zweiten elektrischen Maschine (7) mit der Welle (13) mechanisch verbunden sind,
- wobei der Stator der zweiten elektrischen Maschine (3) einen kleineren Außendurchmesser als der Stator (6) der ersten elektrischen Maschine (2) aufweist,
- wobei der Umsetzer (4) für elektrische Leistung mit der Welle (13) mechanisch verbunden ist und in dem Raum auf der Innenseite des Rotors (6) der ersten elektrischen Maschine (3) angeordnet ist und mit der Wicklung des Rotors (6) der ersten elektrischen Maschine (2) und mit der Wicklung des Rotors (8) der zweiten elektrischen Maschine (7) elektrisch verbunden ist, **dadurch gekennzeichnet, dass** es ferner Folgendes umfasst:
- einen Innenlüfter (14), der zur zweiten elektrischen Maschine benachbart vorgesehen ist, und
- einen Wärmetauscher (21);
- wobei der Innenlüfter (14) mit der Welle (13) mechanisch verbunden ist und Innenluft in die zweite elektrische Maschine (3), in den Umsetzer (4) für elektrische Leistung und in die erste elektrische Maschine (2) zirkulieren lässt, und
- wobei der Wärmetauscher (21) auf der Außenseite der zweiten elektrischen Maschine (3) angeordnet ist, wobei Außenluft in den Wärmetauscher (21) strömt und die Innenluft, die der Innenlüfter (14) umwälzt, in den Wärmetauscher (21) strömt und der Wärmetauscher (21) die eingetretene Innenluft durch einen Wärmeaustausch zwischen der eingetretenen Innenluft und der eingetretenen Außenluft kühlt.

2. System elektrischer Maschinen nach Anspruch 1, das ferner Folgendes umfasst:
eine Kühlrippe, die an einem Außenumfang des Rahmens (16) der zweiten elektrischen Maschine (3) vorgesehen ist und zwischen der zweiten elektrischen Maschine und dem Wärmetauscher (21) angeordnet ist, wobei die Außenluft über die Kühlrippe strömt.

3. System elektrischer Maschinen nach Anspruch 1 oder Anspruch 2, das ferner Folgendes umfasst:
Kühlrippen, die auf beiden Seiten des Rahmens (15) der ersten elektrischen Maschine (2) derart vorgesehen sind, dass sie auf der Innenseite und auf der Außenseite der ersten elektrischen Maschine (2) angeordnet sind,
wobei sich die Kühlrippe, die auf der Außenseite des Rahmens (15) der ersten elektrischen Maschine (2) vorgesehen ist, vom Rahmen (15) der ersten elektrischen Maschine (2) zu einer Position zwischen der zweiten elektrischen Maschine (3) und dem Wärmetauscher (21) erstreckt, wobei die Außenluft über die Kühlrippe strömt, und
wobei die Innenluft, die der Innenlüfter (14) zirkulieren lässt, über die Kühlrippe strömt, die auf der Innenseite des Rahmens (15) der ersten elektrischen Maschine (2) vorgesehen ist.

4. System elektrischer Maschinen nach Anspruch 3, wobei der Umsetzer für elektrische Leistung eine Kühlrippe (24) enthält,
wobei die Kühlrippe (24) des Umsetzers für elektrische Leistung und die Kühlrippe, die auf der Innenseite des Rahmens (15) der ersten elektrischen Maschine (2) vorgesehen ist, jeweils mehrere vorstehende Elemente enthalten, und
wobei die vorstehenden Elemente der Kühlrippe (24) des Umsetzers (4) für elektrische Leistung und das vorstehende Element der Kühlrippe, die auf der anderen Seite des Rahmens (15) der ersten elektrischen Maschine (2) derart vorgesehen ist, dass sie auf der Innenseite der ersten elektrischen Maschine (2) angeordnet ist, ausgelegt sind, einander zugewandt zu sein und sich in gegenseitigem Eingriff zu befinden.

5. System elektrischer Maschinen nach Anspruch 1,
einen Rahmen (17), der einen Außenumfang des Systems elektrischer Maschinen umgibt;
eine Kühlrippe, die an einem Außenumfang des Rahmens (15) der ersten elektrischen Maschine (2) vorgesehen ist;
eine Außenluftabdeckung (26), die auf dem Rahmen (17) des Systems elektrischer Maschinen vorgesehen ist und mindestens die Kühlrippe und einen Teil des Wärmetauschers (21) abdeckt; und
einen Außenlüfter (22), der auf dem Rahmen (17) des Systems elektrischer Maschinen vorgesehen ist,
wobei die Außenluft, die durch den Außenlüfter (22) verströmt wird, durch die Außenluftabdeckung derart gelenkt wird, dass sie über die Kühlrippe (25) strömt.

6. System elektrischer Maschinen nach Anspruch 1,
wobei der Wärmetauscher (21) in seinem oberen Teil und in seinem unteren Teil Öffnungsabschnitte enthält,
wobei die Innenluft, die der Innenlüfter (14) umwälzt, durch den Öffnungsabschnitt im oberen Teil in den Wärmetauscher (21) strömt und die eingetretene Innenluft durch den Öffnungsabschnitt im unteren Teil aus dem Wärmetauscher (21) strömt.

7. System elektrischer Maschinen, das Folgendes umfasst:
- eine erste elektrische Maschine (2);
- eine zweite elektrische Maschine (3), die benachbart zur ersten elektrischen Maschine (2) vorgesehen ist;
- einen Umsetzer (4) für elektrische Leistung;
- und eine Welle (13);
- wobei die erste elektrische Maschine (2) und die zweite elektrische Maschine (3) jeweils einen Stator (5, 7), der eine Wicklung und einen Eisenkern aufweist, einen Rotor (6, 8), der eine Wicklung und einen Eisenkern aufweist und auf der Innenseite des Stators (5, 7) angeordnet ist, und einen Außenumfang, der von einem Rahmen (15, 16) umgeben ist, enthalten,
- wobei der Rotor (6) der ersten elektrischen Maschine (2) und der Rotor (8) der zweiten elektrischen Maschine (7) mit der Welle (13) mechanisch verbunden sind,
- wobei der Stator der zweiten elektrischen Maschine (3) einen kleineren Außendurchmesser als der Stator (6) der ersten elektrischen Maschine (2) aufweist,
- wobei der Umsetzer (4) für elektrische Leistung mit der Welle (13) mechanisch verbunden ist und in dem Raum auf der Innenseite des Rotors (6) der ersten elektrischen Maschine (3) angeordnet ist und mit der Wicklung des Rotors (6) der ersten elektrischen Maschine (2) und mit der Wicklung des Rotors (8) der zweiten elektrischen Maschine (7) elektrisch verbunden ist, **dadurch gekennzeichnet, dass** es ferner Folgendes umfasst:
- einen Innenlüfter (14), der benachbart zur zweiten elektrischen Maschine vorgesehen ist, und
- einen Wärmetauscher (29);
- wobei der Innenlüfter (14) mit der Welle (13) mechanisch verbunden ist und Innenluft in die zweite elektrische Maschine (3), in den Umsetzer (4) für elektrische Leistung und in die erste elektrische Maschine (2) umwälzt, und
- wobei der Wärmetauscher (29) ein Wasserkühlungswärmetauscher (29) ist, der auf der Außenseite der zweiten elektrischen Maschine (3) angeordnet ist; und
eine Kühlmittelrohrleitung (30) mit dem Wasserkühlungswärmetauscher (29) verbunden ist;
wobei dem Wasserkühlungswärmetauscher (29) mit der Kühlmittelrohrleitung (30) Kühlwasser versehen ist,
wobei die Innenluft, die der Innenlüfter (14) umwälzt, in den Wasserkühlungswärmetauscher (29) strömt, und
wobei der Wasserkühlungswärmetauscher (29) die eingetretene Innenluft durch einen Wärmeaustausch zwischen der eingetretenen Innenluft und dem Kühlwasser kühlt.

8. System elektrischer Maschinen nach Anspruch 1, das ferner Folgendes umfasst:
einen zusätzlichen Lüfter (31), der auf der Seite des einen Endes der Welle (13) vorgesehen ist, wobei der Innenlüfter (14) mit der Seite des einen Endes verbunden ist, und
eine Lüfterabdeckung (32), die auf dem Wärmetauscher (21) vorgesehen ist, um den zusätzlichen Lüfter (14) abzudecken.

9. Windkraftwerksystem, das Folgendes umfasst:
ein System elektrischer Maschinen, das eine Welle (13) enthält und die Rotationsenergie der Welle (13) in elektrische Energie umsetzt,
eine Gondel (41), die das System elektrischer Maschinen darin enthält,
einen Turm (42), der die Gondel (41) trägt, und
ein Rotorblatt (43), das mit der Welle (13) verbunden ist und durch den Wind gedreht wird, um die Welle (13) zu drehen,
wobei das System elektrischer Maschinen ein System elektrischer Maschinen nach einem der Ansprüche 1 bis 8 ist.

## Revendications

1. Système de machine électrique comprenant :
- une première machine électrique (2) ;
- une seconde machine électrique (3) prévue à côté de la première machine électrique (2) ;
- un convertisseur de puissance électrique (4) ;
- et un arbre (13) ;
dans lequel la première machine électrique (2) et la seconde machine électrique (3) incluent chacune un stator (5, 7) comportant un enroulement et un noyau de fer, un rotor (6, 8) comportant un enroulement et un noyau de fer et disposé sur le côté intérieur du stator (5, 7), et une périphérie extérieure entourée par un châssis (15, 16),
dans lequel le rotor (6) de la première machine électrique (2) et le rotor (8) de la seconde machine électrique (7) sont reliés mécaniquement à l'arbre (13),
dans lequel le stator de la seconde machine électrique (3) a un plus petit diamètre extérieur que le stator (6) de la première machine électrique (2),
dans lequel le convertisseur de puissance électrique (4) est relié mécaniquement à l'arbre (13) et placé dans l'espace sur le côté intérieur du rotor (6) de la première machine électrique (3), et relié électriquement à l'enroulement du rotor (6) de la première machine électrique (2) et à l'enroulement du rotor (8) de la seconde machine électrique (7),
**caractérisé en ce qu'**il comprend en outre :
- un ventilateur interne (14) prévu à côté de la seconde machine électrique et
- un échangeur de chaleur (21) ;
- dans lequel le ventilateur interne (14) est relié mécaniquement à l'arbre (13) et fait circuler de l'air interne dans la seconde machine électrique (3), le convertisseur de puissance électrique (4) et la première machine électrique (2), et
- dans lequel l'échangeur de chaleur (21) est placé sur le côté extérieur de la seconde machine électrique (3), de l'air externe entrant dans l'échangeur de chaleur (21) et de l'air interne mis en circulation par le ventilateur interne (14) entrant dans l'échangeur de chaleur (21), et l'échangeur de chaleur (21) refroidissant l'air interne entré par échange de chaleur entre l'air interne entré et l'air externe entré.

2. Système de machine électrique selon la revendication 1, comprenant en outre :
une ailette de refroidissement prévue sur une périphérie extérieure du châssis (16) de la seconde machine électrique (3) et positionnée entre la seconde machine électrique et l'échangeur de chaleur (21), l'air externe s'écoulant sur l'ailette de refroidissement.

3. Système de machine électrique selon la revendication 1 ou la revendication 2, comprenant en outre :
des ailettes de refroidissement prévues des deux côtés du châssis (15) de la première machine électrique (2) pour être positionnées sur le côté intérieur et le côté extérieur de la première machine électrique (2),
dans lequel l'ailette de refroidissement prévue sur le côté extérieur du châssis (15) de la première machine électrique (2) s'étend à partir du châssis (15) de la première machine électrique (2) vers une position située entre la seconde machine électrique (3) et l'échangeur de chaleur (21), l'air externe s'écoulant sur l'ailette de refroidissement, et
dans lequel l'air interne mis en circulation par le ventilateur interne (14) s'écoule sur l'ailette de refroidissement prévue sur le côté intérieur du châssis (15) de la première machine électrique (2).

4. Système de machine électrique selon la revendication 3,
dans lequel le convertisseur de puissance électrique inclut une ailette de refroidissement (24),
dans lequel l'ailette de refroidissement (24) du convertisseur de puissance électrique et l'ailette de refroidissement prévue sur le côté intérieur du châssis (15) de la première machine électrique (2) incluent chacune une pluralité d'éléments en saillie, et
dans lequel les éléments en saillie de l'ailette de refroidissement (24) du convertisseur de puissance électrique (4) et l'élément en saillie de l'ailette de refroidissement prévue sur l'autre côté du châssis (15) de la première machine électrique (2) pour être positionnée sur le côté intérieur de la première machine électrique (2) sont disposés de façon à se faire face et à coopérer les uns avec les autres.

5. Système de machine électrique selon la revendication 1, comprenant en outre :
un châssis (17) entourant une périphérie extérieure du système de machine électrique ;
une ailette de refroidissement prévue sur une périphérie extérieure du châssis (15) de la première machine électrique (2) ;
un couvercle d'air externe (26) prévu sur le châssis (17) du système de machine électrique et couvrant au moins l'ailette de refroidissement et une partie de l'échangeur de chaleur (21) ; et
un ventilateur externe (22) prévu sur le châssis (17) du système de machine électrique,
dans lequel de l'air externe mis en circulation par le ventilateur externe (22) est guidé par le couvercle d'air externe pour s'écouler sur l'ailette de refroidissement (25).

6. Système de machine électrique selon la revendication 1,
dans lequel l'échangeur de chaleur (21) inclut des portions ouvertes dans une partie supérieure et une partie inférieure de celui-ci,
dans lequel l'air interne mis en circulation par le ventilateur interne (14) entre dans l'échangeur de chaleur (21) à travers la portion ouverte dans la partie supérieure et l'air interne entré sort de l'échangeur de chaleur (21) à travers la portion ouverte dans la partie inférieure.

7. Système de machine électrique comprenant :
- une première machine électrique (2) ;
- une seconde machine électrique (3) prévue à côté de la première machine électrique (2) ;
- un convertisseur de puissance électrique (4) ;
- et un arbre (13) ;
- dans lequel la première machine électrique (2) et la seconde machine électrique (3) incluent chacune un stator (5, 7) comportant un enroulement et un noyau de fer, un rotor (6, 8) comportant un enroulement et un noyau de fer et disposé sur le côté intérieur du stator (5, 7), et une périphérie extérieure entourée par un châssis (15, 16),
- dans lequel le rotor (6) de la première machine électrique (2) et le rotor (8) de la seconde machine électrique (7) sont reliés mécaniquement à l'arbre (13),
- dans lequel le stator de la seconde machine électrique (3) a un plus petit diamètre extérieur que le stator (6) de la première machine électrique (2),
- dans lequel le convertisseur de puissance électrique (4) est relié mécaniquement à l'arbre (13) et placé dans l'espace sur le côté intérieur du rotor (6) de la première machine électrique (3), et relié électriquement à l'enroulement du rotor (6) de la première machine électrique (2) et à l'enroulement du rotor (8) de la seconde machine électrique (7),
**caractérisé en ce qu'**il comprend en outre :
- un ventilateur interne (14) prévu à côté de la seconde machine électrique ;
- un échangeur de chaleur (29) ;
- dans lequel le ventilateur interne (14) est relié mécaniquement à l'arbre (13) et fait circuler de l'air interne dans la seconde machine électrique (3), le convertisseur de puissance électrique (4) et la première machine électrique (2), et
- dans lequel l'échangeur de chaleur (29) est un échangeur de chaleur à refroidissement par eau (29) placé sur le côté extérieur de la seconde machine électrique (3) ; et
- une tuyauterie de réfrigérant (30) reliée à l'échangeur de chaleur à refroidissement par eau (29) ;
dans lequel de l'eau de refroidissement est fournie à l'échangeur de chaleur à refroidissement par eau (29) par la tuyauterie de réfrigérant (30),
dans lequel l'air interne mis en circulation par le ventilateur interne (14) entre dans l'échangeur de chaleur à refroidissement par eau (29), et
dans lequel l'échangeur de chaleur à refroidissement par eau (29) refroidit l'air interne entré par échange de chaleur entre l'air interne entré et l'eau de refroidissement.

8. Système de machine électrique selon la revendication 1, comprenant en outre :
un ventilateur supplémentaire (31) prévu sur un côté d'extrémité de l'arbre (13), le ventilateur interne (14) étant relié audit côté d'extrémité, et
un couvercle de ventilateur (32) prévu sur l'échangeur de chaleur (21) pour couvrir le ventilateur supplémentaire (14).

9. Système de génération d'énergie éolienne comprenant :
un système de machine électrique incluant un arbre (13) et convertissant l'énergie de rotation de l'arbre (13) en énergie électrique,
une nacelle (41) incluant le système de machine électrique dans celle-ci,
une tour (42) supportant la nacelle (41), et
une pale (43) reliée à l'arbre (13) et mise en rotation par le vent pour faire tourner l'arbre (13),
dans lequel le système de machine électrique est un système de machine électrique selon l'une quelconque des revendications 1 à 8.
